# EUROPEAN PATENT SPECIFICATION

(11) **EP 3 235 776 B1**
(45) Date of publication and mention of the grant of the patent: **03.07.2019**
(21) Application number: 17164997.3
(22) Date of filing: 05.04.2017
(51) Int. Cl.: B66F 9/10, B66F 9/075, B66F 9/24, B66F 17/00, B66F 9/12, G05D 1/02

(54) **FORK-LIFT TRUCK**
GABELSTAPLER
CHARIOT ÉLÉVATEUR À FOURCHE

(30) Priority: 19.04.2016 SE 1650524
(43) Date of publication of application: 25.10.2017
(73) Proprietor: Toyota Material Handling Manufacturing Sweden AB, 595 81 MJÖLBY (SE)
(72) Inventor: Franzén, Oskar, 595 33 Mjölby (SE)
(74) Representative: Zacco Sweden AB

(56) References cited:
- EP-A2- 0 667 276
- DE-A1-102008 031 347
- JP-A- H 058 999
- US-A1- 2014 277 958
- US-A1- 2015 098 780

## Description

The present invention relates to a fork-lift truck in accordance with the preamble of claim 1. The present invention also relates to a method of controlling a fork-lift truck according to claim 7. The present invention also relates to a method of achieving a fork-lift truck according to claim 8. The invention also relates to a computer readable software according to claim 9.

### PRIOR ART

It is know from document EP 2 263 966 B1 to measure position of members of an industrial truck. In particular the document relates to the use of RFID tags in order to achieve a good measurement of the position of said member, without the need of constant calibration, thus allowing for the absolute position to be determined for a particular member.

The above industrial truck has the disadvantage that it is needs many RFID tags to be attached along the movement direction.

Document EP 0 667 276 A2 discloses a fork-lift truck according to the preamble of apparatus claim 1.

### BRIEF DESCRIPTION OF THE INVENTION

The present invention relates to a device at a fork-lift truck according to claim 1.

The advantages of the invention is that it is completely avoids the need to apply a sensor assembly that needs to be present all along the way of linear movement. It becomes particularly easy to measure horizontal extension in the direction of the support legs.

The present invention also relates to a method of controlling a fork-lift truck according to claim 7. The present invention also relates to a method of achieving a fork-lift truck, according to claim 8. The present invention also relates to a computer program product according to claim 9.

### LIST OF DRAWINGS

Figure 1 discloses a fork-lift truck according to the invention.
Figure 2 discloses a graph of velocity as a function of horizontal extension of a method according to the invention.
Figure 3 discloses a graph of velocity as a function of horizontal extension of a method according to the invention.
Figure 4 discloses a graph regarding acceleration as a function of speed.
Figure 5 discloses a flowchart for a method of controlling a fork-lift truck.
Figure 6 discloses a flowchart for a method of achieving a fork-lift truck.

### DETAILED DESCRIPTION

The present disclosure generally refers to the area of reach fork-lift trucks. A fork-lift truck in this context is a material handling vehicle, also referred to as a floor conveyor, a fork-lift, a stacker, order pickers, very narrow aisle trucks, but primarily one common denomination are reach trucks, etc. These types of fork-lift trucks always have the following characterising features; a mast, an actuating device, a pair of support legs. The mast is by the actuating device movable in the horizontal direction, in the direction of the support legs. The mast can be a one section mast, or two, three or four section masts, or actually any number of sections, that allows for a movement of the mast in horizontal direction. The mast can be associated with the support legs such that it has rolls or wheels that run in the support legs. The actuating device is in general able to move the mast in horizontal direction. The actuating device is able to move the mast in both a linear movement both forward and backwards. The actuating device can be a hydraulic cylinder, or two hydraulic cylinders or more hydraulic cylinders. The actuating device can have one cylinder moving the mast in one horizontal direction and a second hydraulic cylinder moving the mast in the horizontal direction. The actuator device can be visible when in operating and it can also be positioned within the support legs. The fork-lift truck can in general include a seat for an operator, a standing platform for an operator, or be a walking truck without any means for transport of the operator. The reach function can be supported by a framework extension assembly, in order to keep the mast essentially vertical when moving along the support legs. The framework extension assembly can be designed in several equally functioning ways. For example can a longer element be attached to a smaller element near the middle of the longer element. The respective two elements are then attached to the fork-lift housing and the mast, such that a sax-like function is achieved. The attachment points are at the housing rotational and also near the bottom end of the mast it is a rotary axis, and on the upper mast attachment point a guided glide path is provided. The opposite configuration is also possible with a single point of attachment at the bottom of the mast, however this is less preferred as it is more difficult to stabilize the mast in vertical direction. A more preferred configuration is that there is a single rotational axis at the middle section of the mast, with a guided glide path at the bottom section of the mast, combined with a actuating device/s positioned close to/or within the support legs. Of course it is possible to use a pentagram like design of the framework extension assembly to. The main function of the framework extension assembly is to make it possible for the mast to be moved in horizontal direction but too still be kept in essentially vertical position.

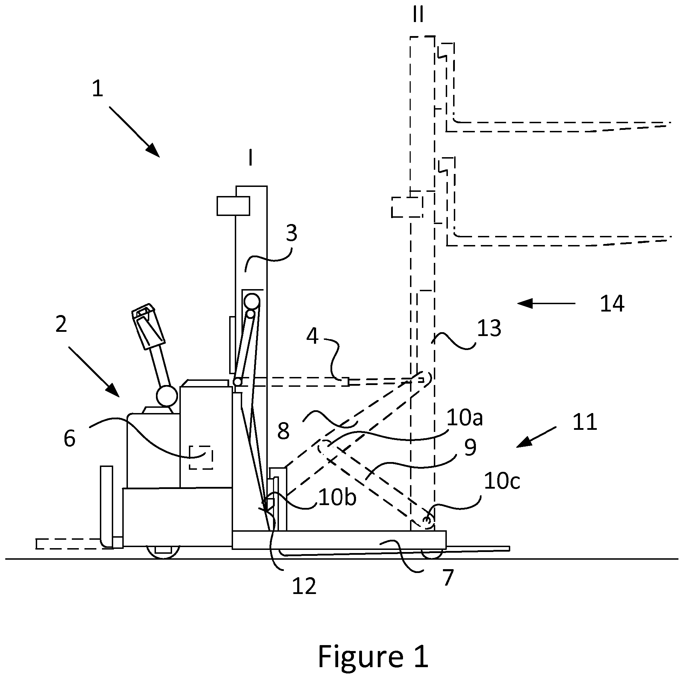

Figure 1 discloses a general aspect of the present disclosure. A fork-lift truck 1 is disclosed with a housing 2 and a mast 3. Further there are two support legs 7 that protrude in the fork direction of the fork-lift truck 1. The support legs 7 have a wheel at one end, but it is of course possible to use rolls, and have more than one wheel per support leg 7. Figure 1 discloses how the mast can be moved in horizontal direction between a retracted state I and a forward state II. The fork-lift truck 1 is provided with several optional features such as a platform that is pivotal and a tiller handle for controlling the fork-lift truck by an operator. The platform can be removed and the tiller handle can be replaced by another control device such as a steering wheel in combination with a seat for the operator.

The framework extension assembly 5 preferably has two main elements 8 and 9, see Figure 1. An actuating device 4 is also disclosed. The first element 8 is attached in the bottom part of the housing 2, by means of a rotary axis 10b. There is a rotary axis 10a joining the two elements 8, 9 together. There is also a rotary axis 10c at the bottom portion of the mast 3. Preferably the framework extension assembly 5 is further associated with the mast 3 by means of a glide connection 13. A glide connection can be made very robust and exact. In Figure 1 the glide connection is present at the middle section 14 of the mast 3. However it should be understood that the glide connection 13 can alter position with the rotary axis 10c at the bottom section 11 of the mast 3. Thus moving the actuating device/s 4 positioned within/or close to the support legs 7. It could be seen as the frame work extension assembly as disclosed in Figure 1 but, inverted vertically. It is also thinkable to apply the rotary axis 10b in the middle or upper part of the housing 2.

In a preferred configuration there are a sensor device 12 attached to the rotary axis 10b at the bottom portion of the housing 2. The sensor device can be potentiometer, a Hall Effect sensor with corresponding magnet, or the like. The position close or within the housing 2 of the fork-lift truck gives the possibility to protect the sensor device 12 from the often hostile environment in which the fork-lift truck 1 operates. Another advantage is that the connection a control unit 6 of the fork-lift truck 1 is simplified compared with for example a positioning on the mast 3. The sensor device 12 detects the rotary position of the rotary axis 10b. The position is communicated to the control unit 6. According to the invention, this detection is performed in a continuous manner. For detecting the horizontal extension or position of the mast 3, a linear sensor could have been considered to be used. However a linear sensor would require a linear detection along the support leg in order to detect the position of the mast 3. The detection could thus be disturbed for example by dirt and grease, making the positioning of the mast 3 less reliable. Also different types of light detectors, such as laser or ultra sound detectors are often subject to disturbance form dirt or hostile environments. It should be understood that it is possible to attach the sensor device 12 at any rotary axis 10a, 10b, 10c, that has a rotation that correspond to the horizontal extension of the mast 3 in horizontal direction. And also it should be understood that it is possible to have sensors at several rotational axis 10a, 10b and/or 10c, of the framework extension assembly. This configuration would make it possible to compare and achieve an even more exact value of the horizontal extension of the mast 3 in horizontal direction of the fork-lift truck 1.

The control unit 6 is in Figure 1 designed as being positioned within the housing 2. The control unit 6 can be positioned at any position in the fork-lift truck 1. For example it is possible to position the control unit in a tiller handle, or in an operator's panel. The control unit 6 could also be an external control unit 6 that communicates with a wireless interface on the fork-lift truck 1. The control unit 6 is in general a computer provided with a processor, memory, and communication interfaces with the fork-lift trucks electronic components. The control unit 6 can store and execute computer software. The general aspect of the present disclosure is that the control unit 6 is arranged such that it can control the different functions of the fork-lift truck 6, in particular lifting/lowering operations, forward and backward travelling, and also acceleration and deceleration of travel. In general it is possible to adjust the parameters in the memory of the control unit 6 in order to set particular limits to the different functions of the fork-lift truck 1. In particular it is possible to set a maximal speed and/or a maximal acceleration, and/or a maximal deceleration, and/or a maximal lift height, and/or a maximal load weight. This control is made by applying a computer readable code that when executed in the software of the control unit 6 is able to set these different parameters. The control unit 6 is thus able to transform a predetermined rotary position delivered from the sensor device 12 into a horizontal extension of the mast 3. That is into a position in the horizontal direction of the mast 3 compared with the housing 2.

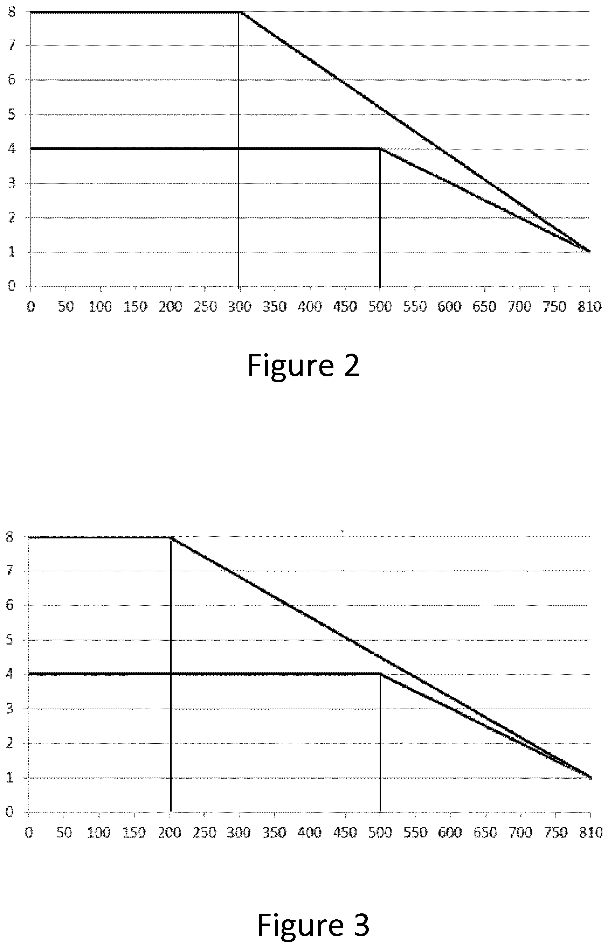

The control of the fork-lift truck 1 according to the aspect of the disclosure is preferably made such as is disclosed in Figure 2. In this figure the vertical Y-axis represents speed and the horizontal X-axis represents horizontal extension of the mast 3 in the direction of the support legs. With horizontal extension is meant the distance from the housing 2 of the fork-lift 1 to the mast 3. A higher number means a higher speed or a longer horizontal extension. As can be seen in Figure 2 for the first part of horizontal extension of the mast 3, the top speed here represented by the number 8 or the number 4, for the lower curve, of the fork-lift truck 1 is in general not altered by the control unit 6. At a predetermined horizontal extension, the control unit is arranged to decrease the top speed. This horizontal extension is in Figure 2 is represented by the number 300 for the upper curve and by the number 500 for the lower curve. At these horizontal extensions the top speed is gradually lowered unit full horizontal extension is reached at the number 810. The numbers are only examples. In figure 3 it can be seen for the upper curve that a number of 200 can be used for allowing the top speed to be decreased.

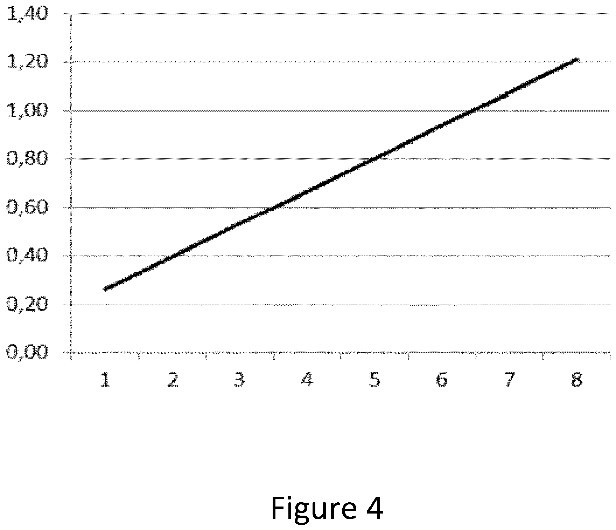

Figure 4 discloses how the acceleration and/or deceleration of the fork-lift truck 1 can be set depending on the horizontal extension of the mast 3. The horizontal extension of the mast 3 cannot be read directly from Figure 4, but by means of the speed number on the horizontal X-axis it is possible to convert speed to allowed acceleration by using Figure 2 or 3. The control unit 6 thus can also alter the possible deceleration and acceleration of the fork-lift truck 1 depending on at which speed the fork-lift truck is travelling before beginning of breaking or acceleration.

It is as mentioned possible to use a rotary potentiometer as the sensor device 12, for detecting the rotary position of the rotary axis 10a, 10b, and/or 10c. The advantage with these is that they are easy to handle and cost effective. In order to achieve the same detected horizontal extension each time a calibration routing is preferably made at each start-up of the fork-lift truck 1. This calibration routine is preferably made automatically by the control unit 6.

It is also possible to use digital hall-effect sensor elements for detecting the rotary position of the rotary axis 10a, 10b and/or 10c, together with one magnet. The advantage of using this configuration is that it is possible to do without the calibration routine.

The fork-lift 1 truck is preferably an electric fork-lift truck comprising an electric drive motor, and an electric pump motor for a comprised hydraulic system. The particular advantage is that it is possible to operate the fork-lift truck inside a ware-house, where exhaust gases are difficult to accept. Having an electric fork-lift truck is also preferred as it is easy to recharge compared with administering liquid fuel. Also for risk of fire electric fork-lift trucks 1 is preferred. And also in particular when handling food stuff it requires special packages etc. if the environment is exposed to combustion fuel exhaust gases.

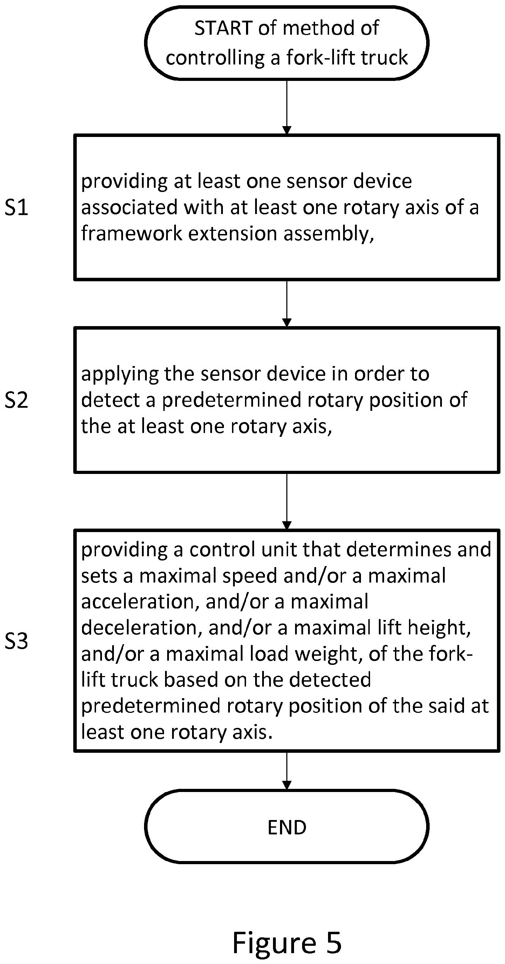

For control of the fork-lift truck 1 the control unit 6 preforms this method, see figure 5 with steps S1-S3 by executing the computer readable software:
- S1 providing at least one sensor device associated with at least one rotary axis of a framework extension assembly,

It is as stated above particularly advantageous to measure at a rotary axis compared with a linear measurement.
- S2 applying the sensor device in order to detect a predetermined rotary position of the at least one rotary axis,

It is as stated above preferred to determine a rotary position of a rotary axis, compared with a direct linear position determination. The method is particularly simple.
- S3 providing a control unit that determines and sets a maximal speed and/or a maximal acceleration, and/or a maximal deceleration, and/or a maximal lift height, and/or a maximal load weight, of the fork-lift truck based on the detected predetermined rotary position of the said at least one rotary axis.

Basing a linear position determination on the rotary position of a rotary axis gives many particular advantages as it is easy to position a sensor device. It is easy to protect the sensor device and the method can be made reliable.

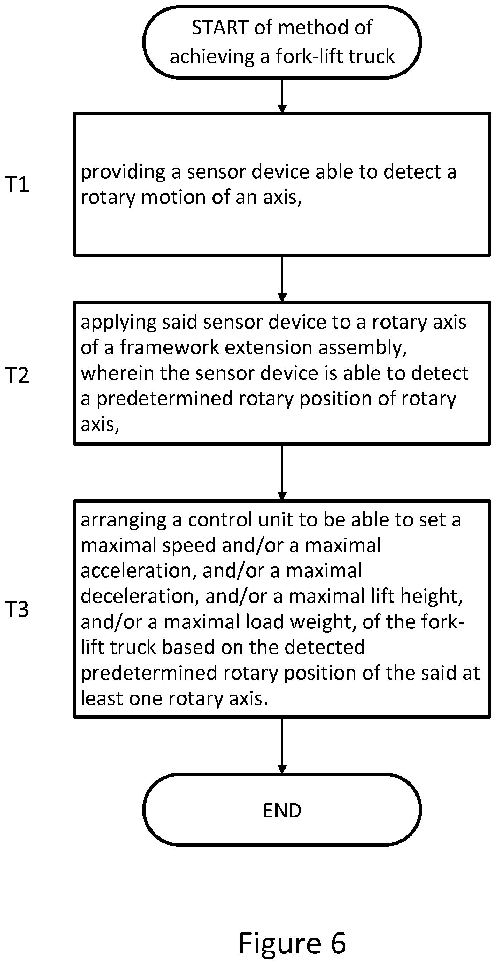

The present disclosure also relates to method, see figure 6, of achieving a fork-lift truck comprising the steps of,
- T1 providing a sensor device able to detect a rotary motion of an axis,
- T2 applying said sensor device to a rotary axis of a framework extension assembly, wherein the sensor device is able to detect a predetermined rotary position of rotary axis,
- T3 arranging a control unit to be able to set a maximal speed and/or a maximal acceleration, and/or a maximal deceleration, and/or a maximal lift height, and/or a maximal load weight, of the fork-lift truck based on the detected predetermined rotary position of the said at least one rotary axis.

By this method it is particularly easy to modify an already existing fork-lift truck that is for example not new. The method can be applied to any fork-lift truck that has a rotary axis that rotates with the horizontal extension of a mast in the horizontal direction.

## Claims

1. Fork-lift truck (1), comprising:
- a housing (2),
- a mast (3),
- an actuating device (4),
- a framework extension assembly (5),
- a control unit (6),
- a pair of support legs (7),
wherein the mast (3) is movable horizontally in the direction of the support legs (7) by means of the actuating device (4) and the framework extension assembly (5), wherein the framework extension assembly (5) comprises at least two elongated elements (8, 9) that movably joins the mast (3) with the housing (2) of the fork-lift truck (1), are joined together at a first rotary axis (10a), wherein the first elongated element (8) is attached to the housing (2) at a second rotary axis (10b), and that the second elongated element (9) is attached to the mast (3) with a third rotary axis (10c),
**characterized in that** the fork-lift truck (1) is provided with a sensor device (12) that is arranged to detect a predetermined rotary position of at least one of the rotary axles (10a, 10b, 10c) of the framework extension assembly (5), wherein said detection is arranged to be made in a continuous manner,
wherein the control unit (6) is arranged to determine and set a maximal speed and/or a maximal acceleration, and/or a maximal deceleration, and/or a maximal lift height, and/or a maximal load weight, of the fork-lift truck (1) based on the detected predetermined rotary position of the said at least one rotary axis (10a, 10b, 10c).

2. Fork-lift truck (1) according to claim 1, wherein the sensor device (12) is a potentiometer, or a hall-effect element combined with a magnet, preferably the hall-effect element is a digital hall-effect element that is further combined with a group of hall-effect elements surrounding at least partly the rotary axis, such that a digital signal can be achieve as a predetermined rotary position is achieved.

3. Fork-lift truck (1) according to any of the claims above, wherein the framework extension device (5) is further associated with the mast (3) by means of a glide connection (13).

4. Fork-lift truck (1) according to any of the claims above, wherein the control unit (6) is arranged such that it is able to determine a predetermined distance of the movable mast (3) in relation to the housing (2) based on the rotary position of the rotary axis (10a, 10b, 10c) framework extension assembly.

5. Fork-lift truck (1) according to any of the claims above, wherein it is an electric fork-lift truck comprising an electric drive motor, and an electric pump motor for a comprised hydraulic system.

6. Fork-lift truck (1) according to any of the claims above, wherein the sensor device (12) is positioned at the second rotating axis (10b).

7. Method of controlling a fork-lift truck according to any of the claims 1-6 comprising the steps of:
- S1 providing at least one sensor device associated with at least one rotary axis of a framework extension assembly,
- S2 applying the sensor device in order to detect a predetermined rotary position of the at least one rotary axis,
- S3 providing a control unit that determines and sets a maximal speed and/or a maximal acceleration, and/or a maximal deceleration, and/or a maximal lift height, and/or a maximal load weight, of the fork-lift truck based on the detected predetermined rotary position of the said at least one rotary axis.

8. Method of achieving a fork-lift truck according to any of the claims 1-6, comprising the step of:
- T1 providing a sensor device able to detect a rotary motion of an axis,
- T2 applying said sensor device to a rotary axis of a framework extension assembly, wherein the sensor device is able to detect a predetermined rotary position of rotary axis,
- T3 arranging a control unit to be able to set a maximal speed and/or a maximal acceleration, and/or a maximal deceleration, and/or a maximal lift height, and/or a maximal load weight, of the fork-lift truck based on the detected predetermined rotary position of the said at least one rotary axis.

9. Computer readable software that when executed on a control unit (6) of a fork-lift truck (1) according to any of the claims 1-6, performs step S3 of the method according to claim 7, and/or step T3 of the method according to claim 8.

## Patentansprüche

1. Gabelstapler (1), umfassend:
- ein Gehäuse (2),
- einen Mast (3),
- eine Betätigungseinrichtung (4),
- eine Rahmenverlängerungsanordnung (5),
- eine Steuereinheit (6),
- ein Paar von Stützfüßen (7),
wobei der Mast (3) horizontal in Richtung der Stützfüße (7) mittels der Betätigungseinrichtung (4) und der Rahmenverlängerungsanordnung (5) beweglich ist, wobei die Rahmenverlängerungsanordnung (5) mindestens zwei längliche Elemente (8, 9) umfasst, die beweglich den Mast (3) mit dem Gehäuse (2) des Gabelstaplers (1) verbinden, an einer ersten Drehachse (10a) miteinander verbunden sind, wobei das erste längliche Element (8) am Gehäuse (2) an einer zweiten Drehachse (10b) befestigt ist, und dass das zweite längliche Element (9) am Mast (3) mit einer dritten Drehachse (10c) befestigt ist,
**dadurch gekennzeichnet, dass** der Gabelstapler (1) mit einer Sensoreinrichtung (12) versehen ist, die angeordnet ist, um eine vorgegebene Drehposition mindestens einer der Drehwellen (10a, 10b, 10c) der Rahmenverlängerungsanordnung (5) zu erfassen, wobei die Erfassung in einer kontinuierlichen Weise erfolgen soll,
wobei die Steuereinheit (6) angeordnet ist, um eine maximale Geschwindigkeit und/oder eine maximale Beschleunigung und/oder eine maximale Verzögerung und/oder eine maximale Hubhöhe und/oder ein maximales Lastgewicht des Gabelstaplers (1) auf Grundlage der erfassten vorgegebenen Drehposition der mindestens einen Drehachse (10a, 10b, 10c) zu bestimmen und einzustellen.

2. Gabelstapler (1) nach Anspruch 1, wobei die Sensoreinrichtung (12) ein Potentiometer oder ein mit einem Magneten kombiniertes Hall-Effekt-Element ist, vorzugsweise das Hall-Effekt-Element ein digitales Hall-Effekt-Element ist, das weiter mit einer Gruppe von Hall-Effekt-Elementen kombiniert ist, die mindestens teilweise die Drehachse umgeben, so dass ein digitales Signal erzielbar ist, während eine vorgegebene Drehposition erzielt wird.

3. Gabelstapler (1) nach einem der vorhergehenden Ansprüche, wobei die Rahmenverlängerungsanordnung (5) weiter mittels einer Gleitverbindung (13) dem Mast (3) zugeordnet ist.

4. Gabelstapler (1) nach einem der vorhergehenden Ansprüche, wobei die Steuereinheit (6) so angeordnet ist, dass sie im Stande ist, einen vorgegebenen Abstand des beweglichen Masts (3) bezüglich des Gehäuses (2) auf Grundlage der Drehposition der Drehachse (10a, 10b, 10c) der Rahmenverlängerungsanordnung zu bestimmen.

5. Gabelstapler (1) nach einem der vorhergehenden Ansprüche, wobei es sich um einen elektrischen Gabelstapler handelt, der einen elektrischen Antriebsmotor und einen elektrischen Pumpenmotor für ein umfassendes Hydrauliksystem umfasst.

6. Gabelstapler (1) nach einem der vorhergehenden Ansprüche, wobei die Sensoreinrichtung (12) an der zweiten Drehachse (10b) angeordnet ist.

7. Verfahren zum Steuern eines Gabelstaplers nach einem der Ansprüche 1 bis 6, umfassend die folgenden Schritte:
- S1 Bereitstellen mindestens einer Sensoreinrichtung, die zumindest einer Drehachse einer Rahmenverlängerungsanordnung zugeordnet ist,
- S2 Anwenden der Sensoreinrichtung zur Erfassung einer vorgegebenen Drehposition der mindestens einen Drehachse,
- S3 Bereitstellen einer Steuereinheit, welche eine maximale Geschwindigkeit und/oder eine maximale Beschleunigung und/oder eine maximale Verzögerung und/oder eine maximale Hubhöhe und/oder ein maximales Lastgewicht des Gabelstaplers auf Grundlage der erfassten vorgegebenen Drehposition der mindestens einen Drehachse bestimmt und einstellt.

8. Verfahren zum Erzielen eines Gabelstaplers nach einem der Ansprüche 1 bis 6, umfassend die folgenden Schritte:
- T1 Bereitstellen einer Sensoreinrichtung, die im Stande ist, eine Drehbewegung einer Achse zu erfassen,
- T2 Verwenden der Sensoreinrichtung auf eine Drehachse einer Rahmenverlängerungsanordnung, wobei die Sensoreinrichtung im Stande ist, eine vorgegebene Drehposition einer Drehachse zu erfassen,
- T3 Anordnen einer Steuereinheit, so dass sie im Stande ist, eine maximale Geschwindigkeit und/oder eine maximale Beschleunigung und/oder eine maximale Verzögerung und/oder eine maximale Hubhöhe und/oder ein maximales Lastgewicht des Gabelstaplers auf Grundlage der erfassten vorgegebenen Drehposition der mindestens einen Drehachse einzustellen.

9. Computerlesbare Software, die bei der Ausführung auf einer Steuereinheit (6) eines Gabelstaplers (1) nach einem der Ansprüche 1 bis 6 den Schritt S3 des Verfahrens nach Anspruch 7 und/oder den Schritt T3 des Verfahrens nach Anspruch 8 durchführt.

## Revendications

1. Chariot élévateur à fourche (1), comprenant :
- un boîtier (2),
- un mât (3),
- un dispositif d'actionnement (4),
- un ensemble d'extension de cadre (5),
- une unité de commande (6),
- une paire de jambes d'appui (7),
le mât (3) pouvant être déplacé horizontalement en direction des jambes d'appui (7) au moyen du dispositif d'actionnement (4) et de l'ensemble d'extension de cadre (5), l'ensemble d'extension de cadre (5) comprenant au moins deux éléments allongés (8, 9) qui relient de manière mobile le mât (3) au boîtier (2) du chariot élévateur à fourche (1), sont reliés l'un à l'autre par un premier axe de rotation (10a), le premier élément allongé (8) étant fixé au boîtier (2) à un deuxième axe de rotation (10b), et le deuxième élément allongé (9) étant fixé au mât (3) à un troisième axe de rotation (10c),
**caractérisé en ce que** le chariot élévateur à fourche (1) est muni d'un dispositif capteur (12) conçu pour détecter une position de rotation prédéterminée d'au moins l'un des essieux de rotation (10a, 10b, 10c) de l'ensemble d'extension de cadre (5), dans lequel la détection est adaptée de manière à être réalisée d'une manière continue,
dans lequel l'unité de commande (6) est agencée pour déterminer et régler une vitesse maximale et / ou une accélération maximale et / ou une décélération maximale et / ou une hauteur de levage maximale et / ou un poids de charge maximal, du chariot élévateur à fourche (1) sur la base de la position de rotation prédéterminée détectée dudit au moins un axe de rotation (10a, 10b, 10c).

2. Chariot élévateur à fourche (1) selon la revendication 1, dans lequel le dispositif capteur (12) est un potentiomètre ou un élément à effet Hall combiné à un aimant, de préférence l'élément à effet Hall est un élément à effet Hall numérique qui est en outre combiné à un groupe d'éléments à effet Hall entourant au moins en partie l'axe de rotation, de sorte qu'un signal numérique puisse être obtenu lorsqu'une position de rotation prédéterminée est obtenue.

3. Chariot élévateur à fourche (1) selon l'une quelconque des revendications précédentes, dans lequel le dispositif d'extension de cadre (5) est en outre associé au mât (3) au moyen d'une liaison glissante (13).

4. Chariot élévateur à fourche (1) selon l'une quelconque des revendications précédentes, dans lequel l'unité de commande (6) est agencée de manière à pouvoir déterminer une distance prédéterminée du mât mobile (3) par rapport au boîtier (2) basée sur la position de rotation de l'axe de rotation (10a, 10b, 10c) de l'ensemble d'extension du cadre.

5. Chariot élévateur à fourche (1) selon l'une quelconque des revendications précédentes, dans lequel il s'agit d'un chariot élévateur à fourche électrique comprenant un moteur à entraînement électrique et un moteur de pompe électrique pour un système hydraulique compris.

6. Chariot élévateur à fourche (1) selon l'une quelconque des revendications précédentes, dans lequel le dispositif capteur (12) est positionné au niveau du deuxième axe de rotation (10b).

7. Procédé de commande d'un chariot élévateur à fourche selon l'une quelconque des revendications 1 à 6, comprenant les étapes consistant à :
- S1 prévoir au moins un dispositif capteur associé à au moins un axe de rotation d'un ensemble d'extension de cadre,
- S2 mettant en oeuvre le dispositif capteur afin de détecter une position de rotation prédéterminée d'au moins un axe de rotation,
- S3 prévoir une unité de commande qui détermine et règle une vitesse maximale et / ou une accélération maximale et / ou une décélération maximale et / ou une hauteur de levage maximale et / ou un poids de charge maximal, du chariot élévateur à fourche sur la base de la position de rotation prédéterminée détectée dudit au moins un axe de rotation.

8. Procédé de réalisation d'un chariot élévateur à fourche selon l'une quelconque des revendications 1 à 6, comprenant les étapes consistant à :
- T1 prévoir un dispositif capteur capable de détecter un mouvement de rotation d'un axe,
- T2 mettant en oeuvre le dispositif capteur à un axe de rotation d'un ensemble d'extension de cadre, le dispositif de détection étant capable de détecter une position de rotation prédéterminée d'axe rotatif,
- T3 prévoir une unité de commande agencée pour déterminer et régler une vitesse maximale et / ou une accélération maximale et / ou une décélération maximale et / ou une hauteur de levage maximale et / ou un poids de charge maximal, du chariot élévateur à fourche sur la base de la position de rotation prédéterminée détectée dudit au moins un axe de rotation.

9. Logiciel lisible par ordinateur qui, lorsqu'il est exécuté sur une unité de commande (6) d'un chariot élévateur à fourche (1) selon l'une quelconque des revendications 1 à 6, met en oeuvre l'étape S3 du procédé selon la revendication 7, et / ou l'étape T3 du procédé selon la revendication 8.
